# EUROPÄISCHE PATENTSCHRIFT

(11) **EP 1 544 253 B1**
(45) Veröffentlichungstag und Bekanntmachung des Hinweises auf die Patenterteilung: **11.02.2009**
(21) Anmeldenummer: 04106319.9
(22) Anmeldetag: 06.12.2004
(51) Int. Cl.: C08L 83/04, C08G 77/12, G02B 1/04

(54) **Additionsvernetzende Siliconharzzusammensetzungen**
Addition curable silicon compositions
Compositions de silicone durcissables par polyaddition

(30) Priorität: 18.12.2003 DE 10359705
(43) Veröffentlichungstag der Anmeldung: 22.06.2005
(73) Patentinhaber: Wacker Chemie AG, 81737 München (DE)
(72) Erfinder: Staiger, Gerhard Dr., 84375 Kirchdorf (DE); Schattenmann, Wolfgang Dr., 84489, Burghausen (DE)
(74) Vertreter: Deffner-Lehner, Maria

(56) Entgegenhaltungen:
- US-A- 3 284 406
- US-A- 3 436 366
- US-A- 4 198 131
- US-A- 5 444 106
- US-A1- 2002 161 140
- US-B1- 6 285 513

## Beschreibung

Die Erfindung betrifft additionsvernetzende Siliconharzzusammensetzungen.

Additionsvernetzende Siloxane sind im Bereich der Elastomere seit langem bekannt, z. B. RTV-2 Kautschuk, Flüssigkautschuk, additionsvernetzender Heißkautschuk. Charakteristischerweise haben diese Massen ausgehärtet Härten im Shore A-Bereich bzw. im Bereich < 20 Shore D.
Bei den entsprechenden vernetzungsfähigen Massen handelt es sich um Zubereitungen aus mindestens 2 Komponenten, die jeweils die Vernetzungsfunktionen Si-H bzw. Si-Vinyl getrennt enthalten.

In US 2002/0161140 A1 ist eine additionsvernetzende Phenylsiliconharzzusammenetzung beschrieben, wobei das gehärtete Siliconharz eine Härte im Bereich Shore D > 60 aufweist. Allerdings sind Härtungstemperaturen von 200 °C erforderlich um lange Aushärtezeiten zu vermeiden. Die Verwendung zusammen mit temperatursensiblen Komponenten, wie Elektronikbauteilen oder Gießformen aus organischem Polymermaterial, ist damit nicht möglich.

Aus EP 1 249 873 A2 ist die Verwendung von Siliconharzen, die eine Shore-A-Härte im Bereich von 50 bis 90 aufweisen, für den Verguss von "Light Emitting iodes", sogenannten LEDs, bekannt. Eine Shore-A-Härte im Bereich von 90 entspricht dabei in etwa einer Shore-D-Härte im Bereich von 40.

Es bestand die Aufgabe additionsvernetzende Siliconharzzusammensetzungen bereitzustellen, bei denen die oben genannten Nachteile vermieden werden, die bei niedrigeren Temperaturen als bisher ohne lange Aushärtezeiten ausgehärtet werden können, die gehärtete Siliconharze mit Härten im Bereich > 40 Shore D ergeben und die zusammen mit temperatursensiblen Komponenten, wie Elektronikbauteilen oder Gießformen aus organischem Polymermaterial, verwendet werden können. Die Aufgabe wird durch die Erfindung gelöst.

Gegenstand der Erfindung sind additionsvernetzende Siliconharzzusammensetzungen enthaltend
(1) 100 Gewichtsteile eines Polyorganosiloxans der allgemeinen Formel

R¹ₐR²_{b}R³_{c}SiO_{(4-a-b-c)/2,} (I)

wobei
R¹ einen einwertigen, aromatischen, gegebenenfalls substituierten Kohlenwasserstoffrest mit 6 bis 16 Kohlenstoffatomen je Rest bedeutet,
R² einen einwertigen Alkenylrest mit 2 bis 10 Kohlenstoffatomen je Rest bedeutet,
R³ einen einwertigen Rest, ausgewählt aus der Gruppe bestehend aus C₁-C₁₈-Alkylresten, Hydroxy- oder C₁-C₆-Alkoxyresten, bedeutet,
a, b und c (bezogen auf eine Siloxaneinheit) 0, 1, 2 oder 3 bedeuten, mit der Maßgabe, das die Summe a+b+c≤3 (bezogen auf eine Siloxaneinheit) ist,
und a, b und c bezogen auf die durchschnittliche Summenformel (I) durchschnittlich

| | |
|---|---|
| 0,3 ≤ a ≤ 1,0, | vorzugsweise 0,4 ≤ a ≤ 0,7, |
| 0,1 ≤ b < 0,3, | vorzugsweise 0,1 ≤ b < 0,25, |
| 0,5 ≤ c ≤ 1,5, | vorzugsweise 0,9 ≤ c ≤ 1,4, |

sind, wobei die Summe aus a+c durchschnittlich

| | |
|---|---|
| 1,0 ≤ a+c < 2,0, | vorzugsweise 1,4 ≤ a+c ≤ 1,8, |

ist, mit der Maßgabe, dass je Molekül mindestens zwei Alkenylreste R², mindestens ein aromatischer Rest R¹ und mindestens eine Einheit der Formel RSiO_{3/2} (wobei R einen Rest R¹, R² oder R³ bedeutet) oder SiO₂ enthalten ist,
(2) 50 bis 200 Gewichtsteile, bevorzugt 80 bis 150 Gewichtsteile, eines Polyorganosiloxans der allgemeinen Formel

R¹_{d}HₑR³_{f}SiO_{(4-d-e-f)/2,} (II)

wobei
R¹ und R³ die oben dafür angegebene Bedeutung haben, d, e und f (bezogen auf eine Siloxaneinheit) 0, 1, 2 und 3 bedeuten, mit der Maßgabe, das die Summe d+e+f≤3 (bezogen auf eine Siloxaneinheit) ist, und d, e und f bezogen auf die durchschnittliche Summenformel (II) durchschnittlich

| | |
|---|---|
| 0,3 ≤ d ≤ 1,0, | vorzugsweise 0,4 ≤ d ≤ 0,7, |
| 0,1 ≤ e < 0,4, | vorzugsweise 0,1 ≤ e ≤ 0,25, |
| 0,5 ≤ f ≤ 1,5, | vorzugsweise 0,9 ≤ f ≤ 1,4, |

sind, wobei die Summe aus d+f durchschnittlich

| | |
|---|---|
| 1,0 ≤ d+f ≤ 2,0, | vorzugsweise 1,4 ≤ d+f ≤ 1,8, |

ist,
mit der Maßgabe, dass je Molekül mindestens zwei Si-gebundene Wasserstoffatome und mindestens ein aromatischer Rest R¹ enthalten ist, oder anstelle von den Bestandteilen (1) und (2)
(3) 200 Gewichtsteile eines Polyorganosiloxans der allgemeinen Formel

R¹_{g}R²ₕR³ᵢHₖSiO_{(4-g-h-i-k)/2,} (III)

wobei
R¹, R² und R³ die oben dafür angegebene Bedeutung haben und g, h, i und k (bezogen auf eine Siloxaneinheit) 0, 1, 2 und 3 bedeuten, mit der Maßgabe, das die Summe g+h+i+k≤3 (bezogen auf eine Siloxaneinheit) ist,
und g, h, i und k bezogen auf die durchschnittliche Summenformel (III) durchschnittlich

| | |
|---|---|
| 0,3 ≤ g ≤ 1,0, | vorzugsweise 0,4 ≤ g ≤ 0,7, |
| 0,1 ≤ h < 0,3, | vorzugsweise 0,1 ≤ h ≤ 0,2, |
| 0,5 ≤ i ≤ 1,5, | vorzugsweise 0,9 ≤ i ≤ 1,4, |
| 0,1 ≤ k < 0,4, | vorzugsweise 0,1 ≤ k ≤ 0,2, |

sind, wobei die Summe aus g+i durchschnittlich

| | |
|---|---|
| 1,0 ≤ g+i ≤ 2,0, | vorzugsweise 1,4 ≤ g+i ≤ 1,8, |

ist und das Verhältnis von h zu k durchschnittlich

| | |
|---|---|
| 0,7 ≤ h/k ≤ 1,3, | vorzugsweise 0,8 ≤ h/k ≤ 1,1 |

ist, mit der Maßgabe, dass je Molekül mindestens zwei Alkenylreste R², mindestens zwei Si-gebundene Wasserstoffatome, mindestens ein aromatischer Rest R¹ und mindestens eine Einheit der Formel RSiO_{3/2} (wobei R einen Rest R¹, R² oder R³ bedeutet) oder SiO₂ enthalten ist,
(4) 1 bis 100 Gewichtsteile, bevorzugt 10 bis 30 Gewichtsteile, eines alkenylreichen Polyorganosiloxans der allgemeinen Formel

R¹ₗR²ₘR³ₙSiO_{(4-l-m-n)/2,} (IV)

wobei
R¹, R² und R³ die oben dafür angegebene Bedeutung haben und l, m und n (bezogen auf eine Siloxaneinheit) 0, 1, 2 und 3 bedeuten, mit der Maßgabe, das die Summe l+m+n≤3 (bezogen auf eine Siloxaneinheit) ist,
und l, m und n bezogen auf die durchschnittliche Summenformel (IV) durchschnittlich

| | |
|---|---|
| 0 ≤ l ≤ 0,5, | vorzugsweise 0 ≤ l ≤ 0,3, |
| | 0,8 ≤ m ≤ 1,0, |
| 0,5 ≤ n ≤ 2, | vorzugsweise 0,8 ≤ n ≤ 1,5, |

sind, wobei die Summe aus l+m+n durchschnittlich

| | |
|---|---|
| 1,0 ≤ l+m+n ≤ 2,5, | vorzugsweise 1,5 ≤ l+m+n ≤ 2,1, |

ist,
mit der Maßgabe, dass je Molekül mindestens zwei Alkenylreste R² enthalten sind, und gegebenenfalls zusätzlich
(5) 1 bis 100 Gewichtsteile, bevorzugt 5 bis 30 Gewichtsteile, eines Wasserstoff-reichen Polyorganosiloxans der allgemeinen Formel

R¹ₒHₚR³_{q}SiO_{(4-o-p-q)/2,} (V)

wobei
R¹ und R³ die oben dafür angegebene Bedeutung haben und o, p und q (bezogen auf eine Siloxaneinheit) 0, 1, 2 und 3 bedeuten, mit der Maßgabe, das die Summe o+p+q≤3 (bezogen auf eine Siloxaneinheit) ist,
und o, p und q bezogen auf die durchschnittliche Summenformel (V) durchschnittlich

| | |
|---|---|
| 0 ≤ o ≤ 0,5, | vorzugsweise 0 ≤ o ≤ 0,3, |
| | 0,8 ≤ p ≤ 1,0, |
| 0,5 ≤ q ≤ 2, | vorzugsweise 0,8 ≤ q ≤ 1,2, |

sind, wobei die Summe aus o+p+q durchschnittlich

| | |
|---|---|
| 1,0 ≤ o+p+q ≤ 2,5, | vorzugsweise 1,5 ≤ o+p+q ≤ 2,1, |

ist, mit der Maßgabe, dass je Molekül mindestens zwei Si-gebundene Wasserstoffatome enthalten sind, und
(6) eine ausreichende Menge eines die Anlagerung von Si-gebundenem Wasserstoff an aliphatische Doppelbindungen fördernden Katalysators.

Die Bestandteile (1) und (2) oder anstelle von (1) und (2) der Bestandteil (3) sind die Basispolymere, die ausgedrückt durch die Indices b bzw. h eine niedrige Dichte an Alkenylgruppen bzw. ausgedrückt durch die Indices e bzw. k eine niedrige Dichte an Si-gebundenen Wasserstoffatomen aufweisen. Der Bestandteil (4) dagegen ist reich an Alkenylgruppen, ausgedrückt durch den deutlich höheren Wert für den Index m, der maximal m = 1 sein kann, d.h. es kann maximal an jedem Si-Atom eine Alkenylgruppe gebunden sein. Der Bestandteil (5) ist reich an Si-gebundenen Wasserstoffatomen, ausgedrückt durch den deutlich höheren Wert für den Index p, der maximal p = 1 sein kann, d.h. es kann maximal an jedem Si-Atom ein Wasserstoffatom gebunden sein.

Beispiele für Reste R¹ sind Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest. Bevorzugt ist der Phenyl- und Naphtylrest, wobei der Phenylrest besonders bevorzugt ist.

Beispiele für Reste Alkenylreste R² sind der Vinyl-, 5-Hexenyl-, Cyclohexenyl-, 1-Propenyl-, Allyl-, 3-Butenyl- und 4-Pentenylrest, wobei der Vinylrest bevorzugt ist.

Beispiele für Reste R³ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; und Cycloalkylreste, wie Cyclopentyl-, Cyclohexyl-, Cycloheptyl- und Methylcyclohexylreste,
wobei C₁-C₆-Alkylrest bevorzugt ist und der Methylrest besonders bevorzugt ist.

Beispiele für Alkoxyreste R³ sind der Methoxy- und Ethoxyrest,
wobei der Ethoxyrest bevorzugt ist.
Bevorzugte Reste R³ sind der Methyl-, Hydroxy-, Methoxy- und Ethoxyrest.

Das Basispolymer (1) ist ein Polyorganosiloxan, das Siloxaneinheiten der Formel (I) enthält, bei dem bezogen auf eine Siloxaneinheit die Indices a, b und c 0, 1, 2 oder 3 bedeuten, mit der Maßgabe, dass je Siloxaneinheit die Summe aus a+b+c ≤ 3 sein muss. Die durchschnittlichen Werte für die Indices a, b und c geben den Durchschnitt über alle Siloxaneinheiten des Polyorganosiloxans (1) an und ergeben dann eine durchschnittliche Summenformel (I). Das für das Basispolymer (1) und die Indices a, b und c Gesagte gilt auch für das Basispolymer (2) mit den Indices d, e und f, für das Basispolymer (3) mit den Indices g, h, i und k, für das alkenylreiche Polyorganosiloxan (4) mit den Indices l, m und n und für das Wasserstoff-reiche Polyorganosiloxan mit den Indices o, p und q.

Das Basispolymer (1) enthält vorzugsweise 0 bis 80 Mol-%, bevorzugt 30 bis 60 Mol-%, RSiO_{3/2}-Einheiten (T-Einheiten), wobei R die oben dafür angegebene Bedeutung hat, vorzugsweise R¹ (bevorzugt Phenylrest) oder R³ (bevorzugt Methylrest) ist. Das Basispolymer (1) kann aber auch ein MQ-Harz aus R₃SiO_{1/2}-Einheiten (M-Einheiten) und SiO₂-Einheiten (Q-Einheiten) enthalten. Es kann auch D-Einheiten, wie R¹R³SiO-Einheiten, und R³₃SiO_{1/2}- und R¹R³₂SiO_{1/2}-Einheiten, wobei R¹ bevorzugt ein Phenylrest und R³ bevorzugt ein Methylrest ist, enthalten.

Die Polyorganosiloxane (1) besitzen vorzugsweise eine durchschnittliche Viskosität von 200 bis 10000 mPa.s bei 25°C, bevorzugt 700 bis 3000 mPa.s bei 25°C.

Die Polyorganosiloxane (2) besitzen vorzugsweise eine durchschnittliche Viskosität von 200 bis 10000 mPa.s bei 25°C, bevorzugt 700 bis 3000 mPa.s bei 25°C.

Bevorzugt wird als Basispolymer der Bestandteil (3) anstelle der Bestandteile (1) und (2) eingesetzt.
Das Basispolymer (3) enthält vorzugsweise folgende Siloxaneinheiten:
Q-Einheiten: vorzugsweise 0 bis 60 Mol-%, bevorzugt 0 Mol-%, SiO₂-Einheiten,
T-Einheiten: vorzugsweise 0 bis 80 Mol-%, bevorzugt 30 bis 80 Mol-% RSiO_{3/2}-Einheiten, wobei R einen Rest R¹ (bevorzugt Phenylrest) oder R³ (bevorzugt Methylrest) bedeutet,
D-Einheiten: vorzugsweise 10 bis 80 Mol-%, bevorzugt 10 bis 50 Mol-%, R'₂SiO-Einheiten, wobei R' einen Rest R² (bevorzugt Vinylrest), einen Rest R³ (bevorzugt Methylrest, Hydroxyrest oder Alkoxyrest) oder ein Wasserstoffatom bedeutet, besonders bevorzugt jeweils 10 bis 20 Mol-% MeViSiO- und MeHSiO-Einheiten (Me=Methylrest, Vi=Vinylrest), und
M-Einheiten: vorzugsweise 5 bis 40 Mol-% R'₃SiO_{1/2}-Einheiten,
wobei R' einen Rest R² (bevorzugt Vinylrest), einen Rest R³ (bevorzugt Methylrest, Hydroxyrest oder Alkoxyrest) oder ein Wasserstoffatom bedeutet.

Die Polyorganosiloxane (3) besitzen vorzugsweise eine durchschnittliche Viskosität von 200 bis 10000 mPa.s bei 25°C, bevorzugt 700 bis 3000 mPa.s bei 25 °C.

Polyorganosiloxane (3) sind in US-A 4,260,726 beschrieben.

Der alkenylreiche Bestandteil (4) ist vorzugsweise ein lineares Polyorganosiloxan, bei dem die Alkenylgruppen bevorzugt in D-Einheiten, wie R²R³SiO-Einheiten, wobei der Alkenylrest R² bevorzugt ein Vinylrest und der Rest R³ bevorzugt ein Methylrest ist, vorliegen.

Ein bevorzugtes Beispiel für das alkenylreiche Polyorganosiloxan (4) ist folgendes der allgemeinen Formel

R⁵₂SiO(R⁴R²SiO)ₓ(R⁴₂SiO)_{y}SiR⁵₂, (VI)

wobei R² die oben dafür angegebene Bedeutung hat,
R⁴ einen Alkylrest mit 1 bis 18 Kohlenstoffatomen bedeutet,
R⁵ ein Rest R⁴ oder ein Hydroxy- oder C₁-C₆-Alkoxyrest bedeutet, x eine ganze Zahl von 3 bis 500 ist und
y 0 oder eine ganze Zahl von 1 bis 250, bevorzugt 0, bedeutet. Bevorzugt enthält das alkenylreiche Polyorganosiloxan der Formel (VI) HOR⁴SiO_{1/2}-Endgruppen.

Bevorzugt enthält das alkenylreiche Polyorganosiloxan (4) je Molekül 5 bis 50 Alkenylreste R², bevorzugt Vinylreste.

Die Polyorganosiloxane (4) besitzen vorzugsweise eine durchschnittliche Viskosität von 5 bis 200 mPa.s bei 25°C, bevorzugt 10 bis 50 mPa.s bei 25°C.

Der Wasserstoff-reiche Bestandteil (5) ist vorzugsweise ein lineares oder cyclisches Polyorganosiloxan, bei dem die Si-gebundenen Wasserstoffatome bevorzugt in D-Einheiten, wie HR³SiO-Einheiten, wobei der Rest R³ bevorzugt ein Methylrest ist, vorliegen.

Bevorzugt als Wasserstoff-reichen Bestandteil (5) sind Polyorganosiloxane der allgemeinen Formel

(HR⁴SiO)_{z} (VII)

und

HᵣR⁴ ₃₋ᵣSiO(HR⁴SiO)ₛ(R⁴ ₂SiO)ₜSiR⁴ ₃₋ᵣHᵣ, (VI)

wobei R⁴ die oben dafür angegebene Bedeutung hat und
z eine ganze Zahl von 3 bis 7 ist,
r o oder 1 ist,
s eine ganze Zahl von 3 bis 50 ist und
t 0 oder eine ganze Zahl von 1 bis 20 ist.

Bevorzugt enthält das Wasserstoff-reiche Polyorganosiloxan (5) je Molekül 4 bis 50 Wasserstoffatome.

Die Polyorganosiloxane (5) besitzen vorzugsweise eine durchschnittliche Viskosität von 2 bis 500 mPa.s bei 25 °C, bevorzugt 5 bis 20 mPa.s bei 25 °C.

Bevorzugt werden bei den erfindungsgemäßen Zusammensetzungen die Bestandteile (4) und (5) zusammen eingesetzt.

Si-gebundener Wasserstoff im Basispolymer (2) bzw. (3) und im Wasserstoff-reichen Polyorganosiloxan (5) wird in Mengen von vorzugsweise 0,5 bis 1,2 Grammatom, bevorzugt 0,6 bis 1,1 Grammatom, Si-gebundener Wasserstoff je Mol Alkenylrest R² im Basispolymer (1) bzw. (3) und im alkenylreichen Polyorganosiloxan (4) eingesetzt.

Als die Anlagerung von Si-gebundenem Wasserstoff an aliphatische Doppelbindung fördernde Katalysatoren können auch bei den erfindungsgemäßen Zusammensetzungen die gleichen Katalysatoren eingesetzt werden, die auch bisher zur Förderung der Anlagerung von Si-gebundenem Wasserstoff an aliphatische Doppelbindung eingesetzt werden konnten. Bei den Katalysatoren handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. PtCl₄, H₂PtCl₆*6H₂O, Na₂PtCl₄*4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungs-produkten aus H₂PtCl₆*6H₂O und Cyclohexanon, Platin-Vinyl-siloxankomplexe, wie Platin-1,3-Divinyl-1,1,3,3-tetramethyl-disiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-di-chlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin oder Ammonium-Platinkomplexe.

Der Katalysator wird bei den erfindungsgemäßen Zusammensetzungen vorzugsweise in Mengen von 20 bis 2000 Gew.ppm (Gewichtsteilen je Million Gewichtsteilen), bevorzugt in Mengen von 50 bis 500 Gew.-ppm, jeweils berechnet als elementares Platin und bezogen auf das Gesamtgewicht der Polyorganosiloxane (1), (2), bzw. (3), (4) und (5) eingesetzt.

Die erfindungsgemäßen Zusammensetzungen aus den Bestandteilen (1), (2), bzw. (3) und (4) und/oder (5) besitzen vorzugsweise eine durchschnittliche Viskosität von 200 bis 10000 mPa.s bei 25°C, bevorzugt 200 bis 3000 mPa.s bei 25°C, besonders bevorzugt 700 bis 2000 mPa.s bei 25°C.

Die erfindungsgemäßen Zusammensetzungen können Inhibitoren enthalten. Als die Anlagerung von Si-gebundenem Wasserstoff an aliphatische Doppelbindung bei Raumtemperatur verzögernde Mittel, sogenannte Inhibitoren, können auch bei den erfindungsgemäßen Zusammensetzungen die gleichen Inhibitoren eingesetzt werden, die auch bisher für den gleichen Zweck verwendet werden konnten.

Beispiele für Inhibitoren sind 1,3-Divinyl-1,1,3,3-tetramethyldisiloxan, Benzotriazol, Dialkylformamide, Alkylthioharnstoffe, Thiurammonosulfide und -disulfide, Methylethylketoxim, organische oder siliciumorganische Verbindungen mit einem Siedepunkt von mindestens 25°C bei 1012 mbar (abs.) und mindestens einer aliphatischen Dreifachbindung, wie 1-Ethinylcyclohexan-1-ol, 2-Methyl-3-butin-2-ol, 3-Methyl-1-pentin-3-ol, 2,5-Dimethyl-3-hexin-2,5-diol und 3,5-Dimethyl-1-hexin-3-ol, 3,7-Dimethyl-oct-1-in-6-en-3-ol, eine Mischung aus Diallylmaleinat und Vinylacetat, Maleinsäuremonoester, und Inhibitoren wie die Verbindung der Formel HC=C-C (CH₃)(OH) -CH₂-CH₂-CH=C(CH₃)₂, käuflich erwerblich unter dem Handelsnamen "Dehydrolinalool" bei der Fa. BASF.

Der Inhibitor wird in Mengen von vorzugsweise 0,001 bis 0,5 Gew.-%, bevorzugt 0,01 bis 0,1 Gew.-%, bezogen auf das Gesamtgewicht der erfindungsgemäßen Zusammensetzung, eingesetzt.

Beispiele für weitere Bestandteile, die bei den erfindungsgemäßen Zusammensetzungen verwendet werden können, sind Füllstoffe, wie verstärkende und nicht verstärkende Füllstoffe, Weichmacher, Haftvermittler, lösliche Farbstoffe, anorganische und organische Pigmente, Fluoreszenzfarbstoffe, Lösungsmittel, Fungicide, Duftstoffe, Dispergierhilfsmittel, rheologische Additive, Korrosionsinhibitoren, Oxidationsinhibitoren, Lichtschutzmittel, Hitzestabilisatoren, flammabweisend machende Mittel, Mittel zur Beeinflussung der elektrischen Eigenschaften und Mittel zur Verbesserung der Wärmeleitfähigkeit.

Die Reihenfolge beim Vermischen der Bestandteile (1) und (2) bzw. (3) (anstelle von (1) und (2)) (4) und/oder (5) und (6) und gegebenenfalls weiterer Bestandteile ist zwar nicht entscheidend, für die Praxis hat es sich jedoch bewährt, den Bestandteil (6), also den Katalysator, dem Gemisch der anderen Bestandteile zuletzt zuzusetzen.

Die Vernetzung der erfindungsgemäßen Zusammensetzungen erfolgt vorzugsweise bei 70 bis 170°C, bevorzugt 100 bis 150°C. Als Energiequellen für die Vernetzung durch Erwärmen werden vorzugsweise Öfen, z.B. Umlufttrockenschränke, Heizkanäle, beheizte Walzen, beheizte Platten oder Wärmestrahlen des Infrarotbereiches verwendet.
Die Vernetzungszeiten betragen vorzugsweise 0,5 bis 5 Stunden , bevorzugt 1 bis 3 Stunden.

Gegenstand der Erfindung sind weiterhin Formkörper hergestellt durch Vernetzung der erfindungsgemäßen Zusammensetzungen.

Die Formkörper sind - sofern keine weiteren Zusatzstoffe zugemischt wurden - glasklar und haben einen Brechungsindex von 1,47 bis 1,60.

Die erfindungsgemäßen Zusammensetzungen weisen nach vollständiger Aushärtung ohne weitere Zusatzstoffe, wie z.B. Füllstoffe oder Weichmacher, eine Shore-D-Härte vorzugsweise größer 40, bevorzugt im Bereich von 40 bis 70, besonders bevorzugt im Bereich von 50 bis 60, auf.
Die Shore-D-Härte wird nach DIN (Deutsche Industrie Norm) 53505 (bzw. ASTM D 2240 oder ISO 868) bestimmt. In dieser Norm wird auch die Shore-D-Skala der Härte nach Shore A gegenübergestellt.

Die erfindungsgemäßen Zusammensetzungen haben den Vorteil, dass Siliconharze mit Endhärten von > 40 Shore D bei niedrigeren Aushärtungstemperaturen als bisher erhalten werden, ohne dass lange Aushärtungszeiten dafür in Kauf genommen werden müssen.

Insbesondere bei Verguss- und Einbettungsmassen von elektrischen oder elektronischen Bauteilen, wie LEDs, sind niedrige Aushärtungstemperaturen erforderlich.
Weiterhin erlauben die vergleichsweise niedrigen Viskositäten der erfindungsgemäßen Zusammensetzungen die Verwendung als Imprägnierharz, z.B. von elektrischen Isoliersystemen in Motoren, Transformatoren und Kabeln, im Verbund mit anderen Materialien, z.B. Glasgewebe, Papier, Glas-Glimmer-Bänder etc.

Die erfindungsgemäßen Siliconharzzusammensetzungen eignen sich sowohl zur Imprägnierung von porösen Stoffen, wie sie z.B. im Elektroisolierstoffbereich eingesetzt werden (z.B. Glasgewebe, Glimmer) als auch zur Herstellung von Formkörpern, wie auch als Verguss- und Einbettmassen. Die erfindungsgemäßen Zubereitungen weisen aufgrund der milderen Aushärtungsbedingungen im Vergleich zu den bekannten Siliconharzen vor allem bei Verarbeitung zusammen mit temperaturempfindlichen Komponenten (z.B. elektronische Bauteile, Vergussformen) Vorteile auf.

Die niedrige Viskosität und blasenfreie Aushärtung macht die erfindungsgemäßen Formulierungen hervorragend geeignet für die Imprägnierung großer elektrischer Isolationssysteme, wie sie beispielsweise in Traktionsmotoren Verwendung finden. Die hohe thermische Beständigkeit der ausgehärteten Harze erlaubt ihre Verwendung bei Betriebstemperaturen von über 200°C.

Besonders geeignet sind die erfindungsgemäßen Zusammensetzungen für den Verguss von LEDs ("light emitting diodes"). Aufgrund ihrer Temperatur- und UV-Beständigkeit zeigen deren ausgehärtete Massen auch bei HB-LEDs ("High-Brightness-LEDs") sowie LEDs, die Licht kurzer Wellenlänge (380 - 450 nm) bzw. weißes Licht emittieren, auch nach 40000 Stunden Betriebsdauer keinen Abfall der Lichtdurchlässigkeit. Für sämtliche Bauformen von LEDs, die Chipabdeckung erfordern, können die erfindungsgemäßen Massen verwendet werden.

Die milden Aushärtungsbedingungen bei 100 - 150°C erlauben eine preisgünstige und schnelle Fertigung der LEDs. Weiterhin werden durch die niedrige Aushärtungstemperatur thermische Spannungen reduziert, die bei einer Temperaturwechselbelastung zu Rissen führen können.

### Beispiel 1:

100 Teile eines Polysiloxans mit der Zusammensetzung (PhSiO_{3/2})_{0,43}(MeViSiO)_{0,14}(MeHSiO)_{0,18}(Me₃SiO_{1/2})_{0,25} werden mit 20 Teilen eines Polysiloxans mit der Zusammensetzung (MeViSiO)_{0,9}(Me₂SiOH)_{0,1}, 6 Teilen eines Polysiloxans mit der Zusammensetzung (MeHSiO)₄ sowie 0,04 Teilen, bezogen auf Platin, eines Platin-1,3-Divinyl-1,1,3,3-tetramethyldisiloxankomplexes als Hydrosilylierungskatalysator zusammengemischt. Es wird eine Mischung mit einer Viskosität von 520 cSt bei 25°C erhalten, die in einer Form bei 150°C im Laufe 1 Stunde ausgehärtet wird. Dabei entsteht ein glasklarer Formkörper mit einer Härte von 64 Shore D.

### Vergleichsversuch 1:

100 Teile eines Polysiloxans mit der Zusammensetzung (PhSiO_{3/2})_{0,43}(MeViSiO)_{0,14}(MeHSiO)_{0,18}(Me₃SiO_{1/2})_{0,25} werden mit 0, 04 Teilen, bezogen auf Platin, eines Platin-1,3-Divinyl-1,1,3,3-tetramethyl-disiloxankomplexes als Hydrosilylierungskatalysator zusammengemischt. Es wird eine Mischung mit einer Viskosität von 1000 cSt bei 25°C erhalten, die in einer Form bei 150°C im Laufe 1 Stunde ausgehärtet wird. Dabei wird jedoch lediglich eine gelartige Masse erhalten, die Masse ist nicht entformbar und keine messbare Oberflächenhärte besitzt.

### Beispiel 2:

100 Teile eines Polysiloxans mit der Zusammensetzung (PhSiO_{3/2})_{0,43}(MeViSiO)_{0,14}(MeHSiO)_{0,18}(Me₃SiO_{1/2})_{0,25} werden mit 30 Teilen eines Polysiloxans mit der Zusammensetzung (MeViSiO)_{0,9}(Me₂SiOH)_{0,1}, 6 Teilen eines Polysiloxans mit der Zusammensetzung (MeHSiO)₄ sowie 0,04 Teilen, bezogen auf Platin, eines Platin-1,3-Divinyl-1,1,3,3-tetramethyldisiloxankomplexes als Hydrosilylierungskatalysator zusammengemischt. Es wird eine Mischung mit einer Viskosität von 450 cSt bei 25°C erhalten, die in einer Form bei 150°C im Laufe 1 Stunde ausgehärtet wird. Dabei entsteht ein glasklarer Formkörper mit einer Härte von 52 Shore D.

### Beispiel 3:

100 Teile eines Polysiloxans mit der Zusammensetzung (PhSiO_{3/2})_{0,43}(MeViSiO)_{0,14}(MeHSiO)_{0,18}(Me₃SiO_{1/2})_{0,25} werden mit 36 Teilen eines Polysiloxans mit der Zusammensetzung (MeViSiO)_{0,9}(Me₂SiOH)_{0,1}, 6 Teilen eines Polysiloxans mit der Zusammensetzung (MeHSiO)₄ sowie 0,04 Teilen, bezogen auf Platin, eines Platin-1,3-Divinyl-1,1,3,3-tetramethyldisiloxankomplexes als Hydrosilylierungskatalysator zusammengemischt. Es wird eine Mischung mit einer Viskosität von 390 cSt bei 25°C erhalten, die in einer Form bei 150°C im Laufe 1 Stunde ausgehärtet wird. Dabei entsteht ein glasklarer Formkörper mit einer Härte von 40 Shore D.

### Beispiel 4:

100 Teile eines Polysiloxans mit der Zusammensetzung (PhSiO_{3/2})_{0,43}(MeViSiO)_{0,14}(MeHSiO)_{0,18}(Me₃SiO_{1/2})_{0,25} werden mit 40 Teilen eines Polysiloxans mit der Zusammensetzung (MeViSiO)_{0,9}(Me₂SiOH)_{0,1}, 46 Teilen eines Polysiloxans mit der Zusammensetzung (MeHSiO)₄ sowie 0,02 Teilen, bezogen auf Platin, eines Platin-1,3-Divinyl-1,1,3,3-tetramethyldisiloxankomplexes als Hydrosilylierungskatalysator zusammengemischt. Die Mischung wird für 5 min auf 100°C aufgeheizt, dabei entsteht ein glasklarer Formkörper mit einer Härte von 55 Shore D.

### Beispiel 5:

100 Teile eines Polysiloxans mit der Zusammensetzung (PhSiO_{3/2})_{0,43}(MeViSiO)_{0,14}(MeHSiO)_{0,18}(Me₃SiO_{1/2})_{0,25} werden mit 24 Teilen eines Polysiloxans mit der Zusammensetzung (MeViSiO)_{0,9}(Me₂SiOH)_{0,1}, 24 Teilen eines Polysiloxans mit der Zusammensetzung (MeHSiO)₄ sowie 0,04 Teilen, bezogen auf Platin, eines Platin-1,3-Divinyl-1,1,3,3-tetramethyldisiloxankomplexes als Hydrosilylierungskatalysator zusammengemischt. Die Mischung wird für 5 min auf 120°C aufgeheizt, dabei entsteht ein glasklarer Formkörper mit einer Härte von 40 - 45 Shore D.

## Patentansprüche

1. Additionsvernetzende Siliconharzzusammensetzungen enthaltend
(1) 100 Gewichtsteile eines Polyorganosiloxans der allgemeinen Formel
R¹ₐR²_{b}R³_{c}SiO_{(4-a-b-c)/2}, (I)
wobei
R¹ einen einwertigen, aromatischen, gegebenenfalls substituierten Kohlenwasserstoffrest mit 6 bis 16 Kohlenstoffatomen je Rest bedeutet,
R² einen einwertigen Alkenylrest mit 2 bis 10 Kohlenstoffatomen je Rest bedeutet,
R³ einen einwertigen Rest, ausgewählt aus der Gruppe bestehend aus C₁-C₁₈-Alkylresten, Hydroxy- oder C₁-C₆-Alkoxyresten, bedeutet,
a, b und c (bezogen auf eine Siloxaneinheit) 0, 1, 2 oder 3 bedeuten, mit der Maßgabe, das die Summe a+b+c≤3 (bezogen auf eine Siloxaneinheit) ist,
und a, b und c bezogen auf die durchschnittliche Summenformel (I) durchschnittlich
0,3 ≤ a ≤ 1,0,
0,1 ≤ b < 0,3,
0,5 ≤ c ≤ 1,5,
sind, wobei die Summe aus a+c durchschnittlich
1,0 ≤ a+c < 2,0 ist,
mit der Maßgabe, dass je Molekül mindestens zwei Alkenylreste R², mindestens ein aromatischer Rest R¹ und mindestens eine Einheit der Formel RSiO_{3/2} (wobei R einen Rest R¹, R² oder R³ bedeutet) oder SiO₂ enthalten ist,
(2) 50 bis 200 Gewichtsteile eines Polyorganosiloxans der allgemeinen Formel
R¹ _{d}HₑR³ _{f}SiO_{(4-d-e-f)/2}, (II)
wobei
R¹ und R³ die oben dafür angegebene Bedeutung haben,
d, e und f (bezogen auf eine Siloxaneinheit) 0, 1, 2 und 3 bedeuten, mit der Maßgabe, das die Summe d+e+f≤3 (bezogen auf eine Siloxaneinheit) ist,
und d, e und f bezogen auf die durchschnittliche Summenformel (II) durchschnittlich
0.3 ≤ d ≤ 1,0,
0,1 ≤ e < 0,4,
0,5 ≤ f ≤ 1,5,
sind, wobei die Summe aus d+f durchschnittlich
1,0 ≤ d+f ≤ 2, 0, ist,
mit der Maßgabe, dass je Molekül mindestens zwei Si-gebundene Wasserstoffatome und mindestens ein aromatischer Rest R¹ enthalten ist;
oder anstelle von den Bestandteilen (1) und (2)
(3) 200 Gewichtsteile eines Polyorganosiloxans der allgemeinen Formel
R¹ _{g}R² ₕR³ ᵢHₖSiO_{(4-g-h-i-k)/2}, (III)
wobei
R¹, R² und R³ die oben dafür angegebene Bedeutung haben und
g, h, i und k (bezogen auf eine Siloxaneinheit) 0, 1, 2 und 3 bedeuten, mit der Maßgabe, das die Summe g+h+i+k≤3 (bezogen auf eine Siloxaneinheit) ist,
und g, h, i und k bezogen auf die durchschnittliche Summenformel (III) durchschnittlich
0,3 ≤ g ≤ 1,0,
0,1 ≤ h < 0,3,
0,5 ≤ i ≤ 1,5,
0,1 ≤ k < 0,4,
sind, wobei die Summe aus g+i durchschnittlich
1,0 ≤ g+i ≤ 2,0, ist,
und das Verhältnis von h zu k durchschnittlich
0,7 ≤ h/k ≤ 1,3, ist,
mit der Maßgabe, dass je Molekül mindestens zwei Alkenylreste R², mindestens zwei Si-gebundene Wasserstoffatome, mindestens ein aromatischer Rest R¹ und mindestens eine Einheit der Formel RSiO_{3/2} (wobei R einen Rest R¹, R² oder R³ bedeutet) oder SiO₂ enthalten ist,
(4) 1 bis 100 Gewichtsteile eines alkenylreichen Polyorganosiloxans der allgemeinen Formel
R¹ ₗR² ₘR³ ₙSiO_{(4-1-m-n)/2}, (IV)
wobei
R¹, R² und R³ die oben dafür angegebene Bedeutung haben, 1, m und n (bezogen auf eine Siloxaneinheit) 0, 1, 2 und 3 bedeuten, mit der Maßgabe, das die Summe l+m+n≤3 (bezogen auf eine Siloxaneinheit) ist,
und l, m und n bezogen auf die durchschnittliche Summenformel (IV) durchschnittlich
0 ≤ l ≤ 0,5,
0,8 ≤ m ≤ 1,0,
0,5 ≤ n ≤ 2,
sind, wobei die Summe aus l+m+n durchschnittlich
1,0 ≤ l+m+n ≤ 2,5, ist,
mit der Maßgabe, dass je Molekül mindestens zwei Alkenylreste R² enthalten sind,
und gegebenfalls zusätzlich
(5) 1 bis 100 Gewichtsteile eines Wasserstoff-reichen Polyorganosiloxans der allgemeinen Formel
R¹ₒHₚR³_{q}SiO_{(4-o-p-q)/2,} (V)
wobei
R¹ und R³ die oben dafür angegebene Bedeutung haben und o, p und q (bezogen auf eine Siloxaneinheit) 0, 1, 2 und 3 bedeuten, mit der Maßgabe, das die Summe o+p+q≤3 (bezogen auf eine Siloxaneinheit) ist,
und o, p und q bezogen auf die durchschnittliche Summenformel (V) durchschnittlich
0 ≤ o ≤ 0,5_{,}
0,8 ≤ p ≤ 1,0,
0,5 ≤ q ≤ 2,
sind, wobei die Summe aus o+p+q durchschnittlich
1,0 ≤ o+p+q ≤ 2,5, ist,
mit der Maßgabe, dass je Molekül mindestens zwei Si-gebundene Wasserstoffatome enthalten sind, und
(6) eine ausreichende Menge eines die Anlagerung von Sigebundenem Wasserstoff an aliphatische Doppelbindungen fördernden Katalysators.

2. Additionsvernetzende Siliconharzzusammensetzungen nach Anspruch 1, **dadurch gekennzeichnet, dass**
R¹ ein Phenylrest und R² ein Vinylrest ist.

3. Additionsvernetzende Siliconharzzusammensetzungen nach Anspruch 1 oder 2, **dadurch gekennzeichnet, dass** in Formel (I) b durchschnittlich 0,1 ≤ b < 0,25 und die Summe aus a+c durchschnittlich 1,4 ≤ a+c ≤ 1,8 ist.

4. Additionsvernetzende Siliconharzzusammensetzungen nach Anspruch 1, 2 oder 3, **dadurch gekennzeichnet, dass** in Formel (II) e durchschnittlich 0,1 ≤ e ≤ 0,25 ist.

5. Additionsvernetzende Siliconharzzusammensetzungen nach einem der Ansprüche 1 bis 4, **dadurch gekennzeichnet, dass** in Formel (III)
h durchschnittlich 0,1 ≤ h ≤ 0,2,
k durchschnittlich 0,1 ≤ k ≤ 0,2 und
die Summe aus g+i durchschnittlich
1,4 ≤ g+i ≤ 1,8 ist
und das Verhältnis von h zu k durchschnittlich
0,8 ≤ h/k ≤ 1,1 ist.

6. Formkörper hergestellt durch Vernetzung der Zusammensetzungen gemäß einem der Ansprüche 1 bis 5.

7. Formkörper nach Anspruch 6, **dadurch gekennzeichnet, dass** er eine Shore-D-Härte von größer als 40 aufweist.

8. Verwendung der Zusammensetzungen nach einem der Ansprüche 1 bis 5 als Verguss- und Einbettungsmassen von elektrischen oder elektronischen Bauteilen.

9. Verwendung der Zusammensetzungen nach einem der Ansprüche 1 bis 5 als Verguss- und Einbettungsmassen von LEDs (light emitting diodes).

## Claims

1. Addition-crosslinking silicone resin compositions comprising
(1) 100 parts by weight of a polyorganosiloxane of the general formula
R¹ₐR²_{b}R³cSiO_{(4-a-b-c)/2} (I)
in which
R¹ is a monovalent, aromatic, optionally substituted hydrocarbon radical having 6 to 16 carbon atoms per radical,
R² is a monovalent alkenyl radical having 2 to 10 carbon atoms per radical,
R³ is a monovalent radical selected from the group consisting of C₁-C₁₈-alkyl radicals and hydroxyl and C₁-C₆-alkoxy radicals,
a, b and c (based on a siloxane unit) are 0, 1, 2 or 3, with the proviso that the sum a+b+c is ≤ 3 (based on a siloxane unit),
and a, b and c, based on the average empirical formula (I), are on average
0.3 ≤ a ≤ 1.0,
0.1 ≤ b < 0.3,
0.5 ≤ c ≤ 1.5,
the sum a+c being on average
1.0 ≤ a+c < 2.0,
with the proviso that at least two alkenyl radicals R², at least one aromatic radical R¹ and at least one unit of the formula RSiO_{3/2} (in which R is a radical R¹, R² or R³) or SiO₂ are contained per molecule,
(2) from 50 to 200 parts by weight of a polyorganosiloxane of the general formula
R1_{d}HₑR³_{f}SiO_{(4-d-e-f)/2} (II)
in which
R¹ and R³ have the meaning stated above therefor,
d, e and f (based on a siloxane unit) are 0, 1, 2 and 3, with the proviso that the sum d+e+f is ≤ 3 (based on a siloxane unit),
and d, e and f, based on the average empirical formula (II), are on average
0.3 ≤ d ≤ 1.0,
0.1 ≤ e < 0.4,
0.5 ≤ f ≤ 1.5,
the sum d+f being on average
1.0 ≤ d+f ≤ 2.0,
with the proviso that at least two Si-bonded hydrogen atoms and at least one aromatic radical R¹ are contained per molecule,
or, instead of the components (1) and (2),
(3) 200 parts by weight of a polyorganosiloxane of the general formula
R¹_{g}R²ₕR³ᵢHₖSiO_{(4-g-h-i-k)/2} (III)
in which
R¹, R² and R³ have the meaning stated above therefor and
g, h, i and k (based on a siloxane unit) are 0, 1, 2 and 3, with the proviso that the sum g+h+i+k is ≤ 3 (based on a siloxane unit),
and g, h, i and k, based on the average empirical formula (III), are on average
0.3 ≤ g ≤ 1.0,
0.1 ≤ h < 0.3,
0.5 ≤ i ≤ 1.5,
0.1 ≤ k < 0.4,
the sum of g+i being on average
1.0 ≤ g+i ≤ 2.0,
and the ratio of h to k is on average
0.7 ≤ h/k ≤ 1.3,
with the proviso that at least two alkenyl radicals R², at least two Si-bonded hydrogen atoms, at least one aromatic radical R¹ and at least one unit of the formula RSiO_{3/2} (in which R is a radical R¹, R² or R³) or SiO₂ are contained per molecule,
(4) from 1 to 100 parts by weight of an alkenyl-rich polyorganosiloxane of the general formula
R¹ ₗR² ₘR³ ₙSiO_{(4-l-m-n)/2} (IV)
in which
R¹, R² and R³ have the meaning stated above therefor
1, m and n (based on a siloxane unit) are 0, 1, 2 and 3, with the proviso that the sum 1+m+n is ≤ 3 (based on a siloxane unit),
and 1, m and n, based on the average empirical formula (IV), are on average
0 ≤ l ≤ 0.5,
0.8 ≤ m ≤ 1.0,
0.5 ≤ n ≤ 2,
the sum l+m+n being on average
1.0 ≤ l+m+n ≤ 2.5,
with the proviso that at least two alkenyl radicals R² are contained per molecule,
and if appropriate additionally
(5) from 1 to 100 parts by weight of a hydrogen-rich polyorganosiloxane of the general formula
R¹ₒHₚR³_{q}SiO_{(4-o-p-q)/2} (V)
in which
R¹ and R³ have the meaning stated above therefor and
o, p and q (based on a siloxane unit) are 0, 1, 2 and 3, with the proviso that the sum o+p+q is ≤ 3 (based on a siloxane unit),
and o, p and q, based on the average empirical formula (V), are on average
0 ≤ o ≤ 0.5,
0.8 ≤ p ≤ 1.0,
0.5 ≤ q ≤ 2,
the sum o+p+q being on average
1.0 ≤ o+p+q ≤ 2.5,
with the proviso that at least two Si-bonded hydrogen atoms are contained per molecule,
and
(6) a sufficient amount of a catalyst which promotes the addition of Si-bonded hydrogen at aliphatic double bonds.

2. Addition-crosslinking silicone resin compositions according to claim 1, **characterized in that** R¹ is a phenyl radical and R² is a vinyl radical.

3. Addition-crosslinking silicone resin compositions according to claim 1 or 2, **characterized in that**, in formula (I), b is on average 0.1 ≤ b < 0.25 and the sum a+c is on average 1.4 ≤ a+c ≤ 1.8.

4. Addition-crosslinking silicone resin compositions according to claim 1, 2 or 3, **characterized in that**, in formula (II), e is on average 0.1 ≤ e ≤ 0.25.

5. Addition-crosslinking silicone resin compositions according to any of claims 1 to 4, **characterized in that**, in formula (III),
h is on average 0.1 ≤ h ≤ 0.2,
k is on average 0.1 ≤ k ≤ 0.2 and
the sum g+i is on average
1.4 ≤ g+i ≤ 1.8,
and the ratio of h to k is on average
0.8 ≤ h/k ≤ 1.1.

6. Moulding produced by crosslinking the compositions according to any of claims 1 to 5.

7. Moulding according to claim 6, **characterized in that** it has a Shore D hardness greater than 40.

8. Use of the compositions according to any of claims 1 to 5 as potting and embedding compounds of electrical or electronic components.

9. Use of the compositions according to any of claims 1 to 5 as potting and embedding compounds of LEDs (light emitting diodes).

## Revendications

1. Compositions de résine silicone réticulables par addition, contenant
(1) 100 parties en poids d'un polyorganosiloxane de formule générale
R¹ₐR²_{b}R³_{c}SiO_{(4-a-b-c)/2} (I)
dans laquelle
R¹ représente un radical hydrocarboné aromatique monovalent, éventuellement substitué, ayant de 6 à 16 atomes de carbone par radical,
R² représente un radical alcényle monovalent ayant de 2 à 10 atomes de carbone par radical,
R³ représente un radical monovalent choisi dans l'ensemble constitué par des radicaux alkyle en C₁-C₁₈, hydroxy ou alcoxy en C₁-C₆,
a, b et c (sur la base d'un motif siloxane) représentant 0, 1, 2 ou 3, étant entendu que la somme a+b+c est ≤ 3 (sur la base d'un motif siloxane),
et a, b et c sur la base de la formule brute moyenne (I) valent en moyenne
0,3 ≤ a ≤ 1,0,
0,1 ≤ b < 0,3,
0,5 ≤ c ≤ 1,5,
la somme de a+c étant en moyenne
1,0 ≤ a+c < 2,0,
étant entendu qu'au moins deux radicaux alcényle R², au moins un radical aromatique R¹ et au moins un motif de formule RSiO_{3/2} (R représentant un radical R¹, R² ou R³) ou SiO₂ sont contenus par molécule,
(2) 50 à 200 parties en poids d'un polyorganosiloxane de formule générale
R¹_{d}HₑR³_{f}SiO_{(4-d-e-f)/2} (II)
dans laquelle
R¹ et R³ ont les significations indiquées plus haut pour ces symboles,
d, e et f (sur la base d'un motif siloxane) représentent 0, 1, 2 ou 3, étant entendu que la somme d+e+f est ≤ 3 (sur la base d'un motif siloxane)
et d, e et f, sur la base de la formule brute moyenne (II), valent en moyenne
0,3 ≤ d ≤ 1,0,
0,1 ≤ e < 0,4,
0,5 ≤ f ≤1,5,
la somme de d+f étant en moyenne
1,0 ≤ d+f ≤ 2,0,
étant entendu qu'au moins deux atomes d'hydrogène liés à Si et au moins un radical aromatique R¹ sont contenus par molécule,
ou, au lieu des composants (1) et (2)
(3) 200 parties en poids d'un polyorganosiloxane de formule générale
R¹_{g}R²ₕR³ᵢHₖSiO_{(4-g-h-i-k)/2} (III)
dans laquelle
R¹, R² et R³ ont les significations données plus haut pour ces symboles et
g, h, i et k (sur la base d'un motif siloxane) représentent 0, 1, 2 ou 3, étant entendu que la somme g+h+i+k (sur la base d'un motif siloxane) est ≤ 3, et
g, h, i et k, sur la base de la formule brute moyenne (III), valent en moyenne
0,3 ≤ g ≤ 1,0,
0,1 ≤ h < 0,3,
0,5 ≤ i ≤ 1,5,
0,1 ≤ k < 0,4,
la somme de g+i étant en moyenne
1,0 ≤ g+i ≤ 2,0,
et le rapport de h à k étant en moyenne
0,7 ≤ h/k ≤1,3,
étant entendu qu'au moins deux radicaux alcényle R², au moins deux atomes d'hydrogène liés à Si, au moins un radical aromatique R¹ et au moins un motif de formule RSiO_{3/2} (R représentant un radical R¹, R² ou R³) ou SiO₂ sont contenus par molécule,
(4) 1 à 100 parties en poids d'un polyorganosiloxane riche en alcényle de formule générale
R¹ ₗR² ₘR³ ₙSiO_{(4-l-m-n)/2} (IV)
dans laquelle
R¹, R² et R³ ont les significations indiquées plus haut pour ces symboles,
1, m et n (sur la base d'un motif siloxane) valent 0, 1, 2 ou 3, étant entendu que la somme l+m+n (sur la base d'un motif siloxane) est ≤ 3
et 1, m et n, sur la base de la formule brute moyenne (IV) valent en moyenne
0 ≤ l ≤ 0,5,
0,8 ≤ m ≤ 1,0,
0,5 ≤ n ≤ 2,
la somme de 1+m+n étant en moyenne
1,0 ≤ l+m+n ≤ 2,5,
étant entendu qu'au moins deux radicaux alcényle R² sont contenus par molécule,
et éventuellement en outre
(5) 1 à 100 parties en poids d'un polyorganosiloxane riche en hydrogène, de formule générale
R¹ₒHₚR³_{q}SiO_{(4-o-p-q)/2} (V)
dans laquelle
R¹ et R³ ont les significations données plus haut pour ces symboles et
o, p et q (sur la base d'un motif siloxane) représentent 0, 1, 2 ou 3, étant entendu que la somme o+p+q est ≤ 3 (sur la base d'un motif siloxane),
et o, p et q, sur la base de la formule brute moyenne (V), valent en moyenne
0 ≤ o ≤ 0,5,
0,8 ≤ p ≤ 1,0,
0,5 ≤ q ≤ 2,
la somme de o+p+q étant en moyenne
1,0 ≤ o+p+q ≤ 2,5,
étant entendu qu'au moins deux atomes d'hydrogène liés à Si sont contenus par molécule,
et
(6) une quantité suffisante d'un catalyseur favorisant la fixation par addition d'hydrogène lié à Si sur des doubles liaisons aliphatiques.

2. Compositions de résine silicone réticulables par addition, selon la revendication 1, **caractérisées en ce que**
R¹ est un radical phényle et R² est un radical vinyle.

3. Compositions de résine silicone réticulables par addition, selon la revendication 1 ou 2, **caractérisées en ce que** dans la formule (I) b vaut en moyenne 0,1 ≤ b < 0,25 et la somme de a+c est en moyenne 1,4 ≤ a+c ≤ 1,8.

4. Compositions de résine silicone réticulables par addition, selon la revendication 1, 2 ou 3, **caractérisées en ce que** dans la formule (II) e est en moyenne 0,1 ≤ e ≤ 0,25.

5. Compositions de résine silicone réticulables par addition, selon l'une quelconque des revendications 1 à 4, **caractérisées en ce que** dans la formule (III)
h est en moyenne 0,1 ≤ h ≤ 0,2,
k est en moyenne 0,1 ≤ k ≤ 0,2 et
la somme de g+i est en moyenne
1,4 ≤ g+i ≤ 1,8
et le rapport de h à k est en moyenne
0,8 ≤ h/k ≤ 1,1.

6. Corps moulé produit par réticulation des compositions selon l'une quelconque des revendications 1 à 5.

7. Corps moulé selon la revendication 6, **caractérisé en ce qu'**il présente une dureté Shore D de plus de 40.

8. Utilisation des compositions selon l'une quelconque des revendications 1 à 5, en tant que matières de coulée et d'inclusion de composants électriques ou électroniques.

9. Utilisation des compositions selon l'une quelconque des revendications 1 à 5, en tant que matières de coulée et d'inclusion de LED (diodes luminescents).
